# EUROPÄISCHE PATENTSCHRIFT

(11) **EP 2 910 424 B1**
(45) Veröffentlichungstag und Bekanntmachung des Hinweises auf die Patenterteilung: **06.10.2021**
(21) Anmeldenummer: 14155800.7
(22) Anmeldetag: 19.02.2014
(51) Int. Cl.: B60Q 3/54, B60Q 3/217, B60Q 3/78

(54) **Beleuchtungseinrichtung insbesondere in einem Fahrzeug**
Lighting device, particularly in a vehicle
Dispositif d'éclairage en particulier dans un véhicule

(43) Veröffentlichungstag der Anmeldung: 26.08.2015
(73) Patentinhaber: La Vecchia, Nunzio, 6612 Ascona (CH)
(72) Erfinder: LA VECCHIA, Erminia, 6612 Ascona (CH); LA VECCHIA, Carmine, 6612 Ascona (CH)
(74) Vertreter: Luchs, Willi

(56) Entgegenhaltungen:
- EP-A1- 2 060 444
- EP-A1- 2 218 610
- DE-A1- 10 159 954
- DE-A1- 19 859 195
- DE-A1- 19 909 472
- DE-A1-102005 005 682
- DE-A1-102009 031 820
- DE-A1-102009 055 427
- FR-A1- 2 886 238
- US-A1- 2007 177 397

## Beschreibung

Die Erfindung betrifft ein Fahrzeuginneres mit einer Beleuchtungseinrichtung nach dem Oberbegriff des Anspruchs 1.

Bei einem Innenausbauteil eines Kraftfahrzeugs gemäss der Druckschrift DE-A-198 35 279 ist ein Auskleidungselement zum Beispiel aus Holz als Auskleidung des Innenraums vorgesehen. Zur Beleuchtung des Innenraums ist vorgeschlagen, ein elektrisches Leuchtelement zu integrieren, welches sich vorteilhaft entlang des gesamten Auskleidungselementes erstreckt und flächenhaft ausgebildet ist. Dabei ist es an einem Trägerteil gehalten und kann durch verschiedene Ausführungen gestaltet sein. Diese Beleuchtung ist aber sichtbar und nicht sonderlich ästhetisch, da diese auch eine Trennung des Auskleidungselementes bewirkt.

Bei einer beleuchtbaren Innenausstattung eines Fahrzeugs gemäss der Druckschrift DE-A-10 2005 005 682 ist hinter einer in den Innenraum zeigenden, durchleuchtbaren Oberflächenschicht der Innenausstattung ein Beleuchtungsmittel angeordnet, durch das ein vorgesehener Bereich der Oberflächenschicht beleuchtbar ist. Die Leuchtfarbe und/oder die Leuchtintensität des Beleuchtungsmittels können individuell oder in vorgegebener Weise verändert werden. Bei dieser Innenausstattung sind aber insbesondere Dekorelemente mit einem Beleuchtungsmittel versehen.

Bei einem Sichteinbauteil aus einem Verbundwerkstoff nach der Druckschrift DE-198 59 195 ist eine Trägerschicht und eine zumindest teilweise lichtdurchlässige Dekorschicht in Form einer Furnierschicht vorgesehen, wobei die Dekorschicht durch eine dünne, lichtabstrahlende Fläche hinterleuchtet wird. Die lichtabstrahlende Fläche ist insbesondere eine Elektroluminiszenz-Folie. Als Dekorschichten kommen vorzugsweise Holzfurnierschichten in Betracht. Die Transparenz der Dekorschicht ergibt sich dabei entweder aufgrund der Materialeigenschaften der Dekorschicht selbst oder aufgrund der geringen Schichtdicke bzw. einer Perforation der Dekormaterialien. Auch dieser Einbauteil insbesondere mit Lichtleiter-Folien ist nicht für grossräumige Beleuchtungen geeignet.

In der Druckschrift EP-A-2 060 444 ist insbesondere ein Dekorteil und/oder Verkleidungsteil für einen Fahrzeuginnenraum offenbart, welches mindestens eine Anregungsquelle zur Aussendung elektromagnetischer Wellen und mindestens ein lumineszierendes Material umfasst, das durch die von der oder den Anregungsquellen ausgehenden elektromagnetischen Wellen zur Aussendung von Licht im sichtbaren Bereich anregbar oder angeregt ist. Bei dem lumineszierenden Material handelt es sich um ein fluoreszierendes und/oder ein phosphoreszierendes Material. Die von der Anregungsquelle ausgehenden elektromagnetischen Wellen erzeugen eine UV-Strahlung im nichtsichtbaren Bereich. Gemäss der Druckschrift DE-A-10 2009 031 820 ist ein Kraftfahrzeug-Innenauskleidungsteil mit einer Sichtseite und einer transluzenten Schicht offenbart, wobei letztere zu einem Lichtleiter verschieden ist. Der Lichtleiter ist zur Sichtseite hin zumindest entlang eines Abschnitts von der transluzenten Schicht so überdeckt, so dass Licht an der Sichtseite des Kraftfahrzeug-Innenauskleidungsteils austreten kann, wobei der Lichtleiter dazu ausgelegt ist, dass in dem überdeckten Abschnitt entlang seiner Längsrichtung verteilt Licht austritt, dass die Länge des überdeckten Abschnitts entlang der Längsrichtung des Lichtleiters mindestens der fünffachen mittleren Dicke der transluzenten Schicht entspricht und dass der Lichtleiter in dem überdeckten Abschnitt einen Bereich aufweist.

In der Druckschrift DE-A-10 2009 055 427 ist ein Kraftfahrzeuginnenverkleidungsteil mit einem Kunststoffspritzgussteil mit einer Wandung und einer Lichtquelle zur Abstrahlung von Licht auf die Innenseite der Wandung vorgesehen. Die Lichtquelle ist so ausgebildet, dass das von der Lichtquelle auf die Innenseite der Wandung treffende Licht eine Intensität aufweist, sodass das Licht der Lichtquelle nicht durch die Wandung hindurch visuell wahrnehmbar ist, wobei die Wandung einen Bereich reduzierter Wandstärke aufweist, in dem das Licht der Lichtquelle durch die Wandung hindurch visuell wahrnehmbar ist. Damit sind aber an einen solchen Kunststoff spezielle Anforderungen gestellt und dies kann nicht unmittelbar mit einem Holzelement verglichen werden.

Der vorliegenden Erfindung wurde demgegenüber die Aufgabe zugrundegelegt, eine Beleuchtungseinrichtung in einem Fahrzeug derart zu verbessern, dass mit ihr eine äusserst ästhetische und dezente Wirkung für die Insassen erzielt wird und die Flächenbereiche mit den Holzelementen ebenfalls optimal ausgelegt werden können.

Erfindungsgemäss ist diese Aufgabe nach den Merkmalen des Anspruchs 1 gelöst.

Durch die Anordnung der Beleuchtungsmittel auf der Unterseite der Holzelemente werden erfindungsgemäss mehrere linienförmige Beleuchtungen in einer bestimmten Ausrichtung gebildet, wobei die Holzelemente eine solche Dicke aufweisen, dass diese Beleuchtungsmittel im ausgeschalteten Zustand für einen Insassen nicht sichtbar sind.

Erfindungsgemäss sind diese Beleuchtungsmittel als LED-Leuchten in einem solchen Abstand zueinander angeordnet, dass diese linienförmig erzeugbare Beleuchtungen ohne Unterbrechung auf der Oberseite der Holzelemente erscheinen. Damit ergibt sich ein besonders elegantes Design.

Ausführungsbeispiele der Erfindung sowie weitere Vorteile derselben sind nachfolgend anhand der Zeichnung näher erläutert. Es zeigt:
- Fig. 1: eine teilweise Ansicht eines Fahrzeug-Innenraums mit einer erfindungsgemässen Beleuchtungseinrichtung;
- Fig. 2: einen Querschnitt der teilweise perspektivisch dargestellten Mittelkonsole im Fahrzeug; und
- Fig. 3: einen vergrösserten Querschnitt eines Beleuchtungsmittels nach Fig. 2.

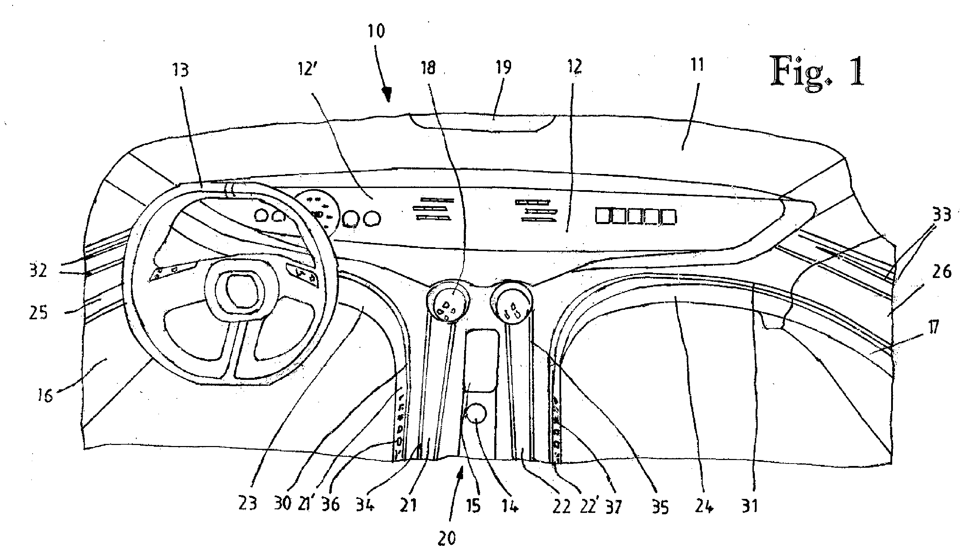

Fig. 1 zeigt einen Innenraum 10 eines Fahrzeugs, von welchem die Vorderseite mit dem Lenkrad 13 und dem Armaturenbrett 12 mit Display 12', die Mittelkonsole 20 und ausserdem teilweise die Seitentüren 16, 17 ersichtlich sind. Bei dem Fahrzeug handelt es sich um einen Personenwagen. Dieser Innenraum könnte selbstverständlich aber auch bei einem Bus, einem Lastwagen oder auch bei einem Schiff oder einem Flugzeug gleichermassen ausgebildet sein.

Die veranschaulichte Mittelkonsole 20 im vorderen Teil, das Armaturenbrett 12 und die Seitentüren 16, 17 des Innenraums 10 sind mit echten Holzelementen 21 bis 26 ausgekleidet, die eine geschwungene Form bilden und sich dabei entlang der Mittelkonsole 20, vorne beim Armaturenbrett 12 bogenförmig nach aussen und entlang der Seitentüre erstrecken.

Erfindungsgemäss ist im Fahrzeuginnern eine Beleuchtungseinrichtung vorgesehen, durch welche mehrere erzeugbare Beleuchtungen 30 bis 33 mit einer bestimmten Ausrichtung durch Beleuchtungsmittel auf der Unterseite der Holzelemente 21 bis 26 gebildet sind, damit eine formschöne Dekorbeleuchtung im Innenraum 10 des Fahrzeugs ermöglicht ist, wobei die Holzelemente 21 bis 26 eine solche Dicke aufweisen, dass diese Beleuchtungsmittel im ausgeschalteten Zustand für einen Insassen unsichtbar sind.

Diese Beleuchtungen 30 bis 33 sind jeweils beim Fahrer- und beim Beifahrersitz vorgesehen und zeichnen sich dadurch aus, dass sie eine annähernd durchgehende linienförmige Beleuchtung erzeugen, die sich entlang der Mittelkonsole 20, vorne beim Armaturenbrett 12 bogenförmig nach aussen und entlang der Seitentüren 16, 17 erstrecken. Im Bereich der Mittelkonsole 20 verlaufen diese Beleuchtungen 30, 31 beidseitig am Rand der Holzelemente 21, 22 entlang ihrer äusseren Seite jeweils beim Fahrer- und beim Beifahrersitz. Vorne gehen sie dann nach aussen zur Bogenform beim Armaturenbrett 12 über.

Bei der Mittelkonsole 20 sind nebst diesen randseitigen Beleuchtungen 30, 31 zusätzliche linienförmige jeweils durch zwei voneinander beabstandete Beleuchtungen 34, 35 vorgesehen, die annähernd parallel zueinander verlaufen und ebenfalls sowohl dem Fahrer- als auch dem Beifahrersitz zugeordnet sind. Diese sind dabei vorne jeweils bis zu Aussenseiten eines Drehknopf 18 geführt.

Des Weiteren sind bei der Mittelkonsole 20 jeweils dem Fahrer- und dem Beifahrer zugewandte Beleuchtungen als aneinandergereihte Funktionstasten 36, 37 zugeordnet. Diese Funktionstasten 36, 37 sind jeweils bei einer sich entlang der Mittelkonsole 20 zu den flächigen Holzelementen 21, 22 abgewinkelt erstreckenden Holzleiste 21', 22' so positioniert, dass dieselben für den Insassen von Hand bequem und gut sichtbar bedient werden können. Ferner ist noch ein Schalter 14 für das Ein- und Ausschalten des Motors und eine Docketingstation für ein Smartphone 15 oder dergleichen angedeutet.

Auch bei diesen Funktionstasten 36, 37 sind auf der Rückseite der Holzleisten 21', 22' Beleuchtungsmittel und ausserdem Drucktasten platziert. Mittels Fingerdruck bei den bei den Holzleisten 21', 22' aufleuchtenden Funktionstasten 36, 37 kann die entsprechende durch Ikonen angezeigte Funktion ausgelöst werden, wie beispielsweise das Herunterlassen oder Anheben der Fensterscheiben, Öffnen der Heckklappe, Verstellung des Sitzes bzw. der Rückenlehne etc..

Diese echten Holzelemente 21 bis 26 bzw. Holzleisten 21', 22' sind als Furniere aus hochwertigem Holz mit natürlichen Maserungen hergestellt. Zudem sind diese vorzugsweise oben mit einer Lasurschicht versehen, damit sie flüssigkeitsundurchlässig sind. Die Dicken dieser Holzelemente können zwischen einigen Zehntelmillimetern bis ein paar Millimetern betragen. Diese Dicken sind so gewählt, dass zum einen ihre Festigkeit ausreichend ist und andererseits diese Lichtdurchlässigkeit optimal erfüllt ist.

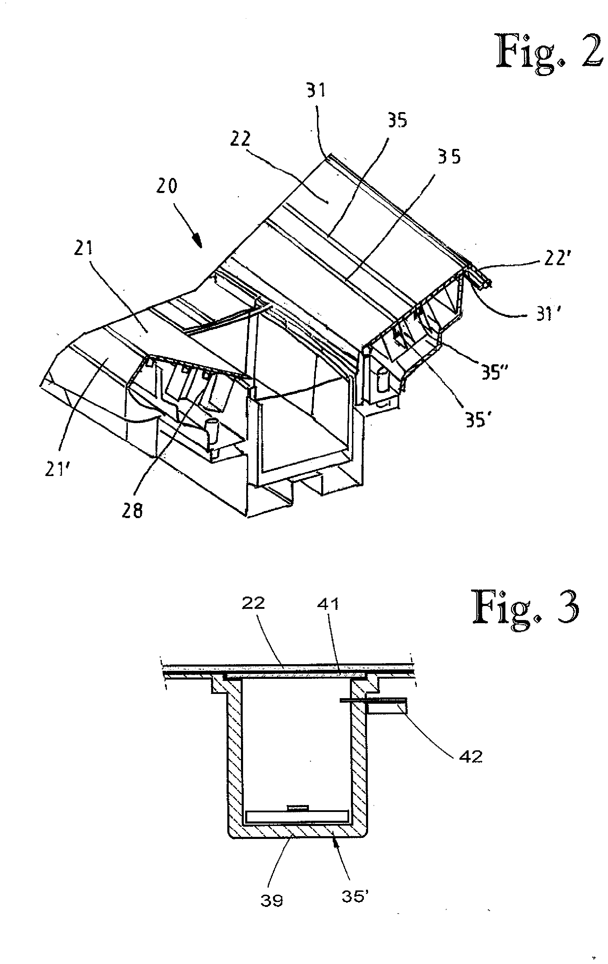

Gemäss Fig. 2 sind diese Holzelemente 21, 22 sowie die Holzleisten 21', 22' bei der Mittelkonsole 20 rückseitig an Trägerprofilen 28, 29 abgestützt, in welchen diese Beleuchtungsmittel 31', 35', 35" jeweils aus einer Anzahl von hintereinander angeordneten LED-Leuchten enthalten sind. Die LED-Leuchten sind dabei in einem solchen Abstand zueinander angeordnet, dass diese linienförmig erzeugbare Beleuchtungen ohne Unterbrechung auf der Oberseite der Holzelemente 22 erscheinen. Zudem sind dieselben vorteilhaft als RGB ausgeführt, damit mit diesen auch verschiedene Leuchtfarben erzeugt werden können.

Fig. 3 zeigt ein Beleuchtungsmittel 35' im Detail, welches jeweils in einem länglichen Gehäuse 39 zur Bildung der linienförmigen Beleuchtung enthalten ist und oberhalb diesem das als Furnier ausgebildete Holzelement 22 mit einer entsprechend transluzenten Dicke versehen ist. Darüberhinaus ist vorzugsweise ein Streifen 41 aus einem lichtstreuenden Material, wie Plexiglas, unterhalb des Holzelementes 22 angeordnet, welches zusätzlich gewährleistet, dass eine gleichmässige Beleuchtung auf dem Holzelement erzeugt wird. Ferner ist ein kapazitiver Schalter 42 beim Gehäuse 39 vorgesehen.

Die Erfindung ist mit dem obigen Ausführungsbeispiel ausreichend dargetan. Andere bzw. unterschiedliche Linienführungen der Beleuchtunkönnen vorgesehen sein.

## Patentansprüche

1. Fahrzeuginneres mit einer Beleuchtungseinrichtung und mit Flächenbereichen, wie Mittelkonsole (20), Armaturenbrett (12) und/oder Seitentüren (16, 17), die zumindest teilweise aus echten Holzelementen (21 bis 26) abgedeckt sind, wobei Beleuchtungsmittel (31', 35', 35") der Beleuchtungseinrichtung auf der Unterseite der Holzelemente (21 bis 26) angeordnet sind, durch welche im Fahrzeuginneren eine sichtbare Beleuchtung erzeugbar ist, wobei durch diese mehrere verschiedenförmig erzeugbare Beleuchtungen (30 bis 35) mit einer bestimmten Ausrichtung gebildet sind, **dadurch gekennzeichnet, dass** die Beleuchtungsmittel (31', 35', 35") jeweils aus einer Anzahl von hintereinander angeordneten LED-Leuchten in einem länglichen Gehäuse (39) zur Bildung einer linienförmigen Beleuchtung enthalten sind und oberhalb diesem Gehäuse (39) das als Furnier ausgebildete Holzelement (21 bis 26) mit einer solchen transluzenten Dicke versehen ist, dass diese Beleuchtungsmittel (31', 35', 35") im ausgeschalteten Zustand für einen Insassen nicht sichtbar sind, und die LED-Leuchten in einem solchen Abstand zueinander angeordnet sind, dass diese linienförmig erzeugbare Beleuchtungen ohne Unterbrechung auf der Oberseite der Holzelemente (21 bis 26) erscheinen.

2. Fahrzeuginneres nach Anspruch 1, **dadurch gekennzeichnet, dass** das Fahrzeuginnere einen Fahrer- und Beifahrersitz, sowie eine Mittelkonsole (20), ein Armaturenbrett (12) und Seitentüren (16, 17) aufweist, und dadurch, dass beim Fahrer- und beim Beifahrersitz jeweils eine annähernd durchgehende linienförmige Beleuchtung (30, 31) erzeugbar ist, die sich entlang der Mittelkonsole (20), vorne beim Armaturenbrett (12) bogenförmig nach aussen und entlang der jeweiligen Seitentüre (16, 17) erstreckt.

3. Fahrzeuginneres nach einem der vorhergehenden Ansprüche **dadurch gekennzeichnet, dass** das Fahrzeuginneres einen Fahrer- und Beifahrersitz und eine Mittelkonsole (20) aufweist, und dadurch, dass zusätzliche linienförmige Beleuchtungen (34, 35) bei der Mittelkonsole (20) jeweils beim Fahrer- und beim Beifahrersitz vorgesehen sind.

4. Fahrzeuginneres nach einem der vorhergehenden Ansprüche, **dadurch gekennzeichnet, dass** die Holzelemente (21 bis 26) aus einer Dicke von ungefähr einigen Zehntelmillimetern bis einige Millimetern bestehen, wobei diese Dicke so gewählt ist, dass zum einen die Festigkeit der Holzelemente ausreichend ist und zum andern diese Lichtdurchlässigkeit optimal erfüllt ist.

5. Fahrzeuginneres nach Anspruch 1, **dadurch gekennzeichnet, dass** in den Beleuchtungsmitteln (31', 35', 35") jeweils wenigstens ein Streifen (41) aus einem lichtstreuenden Material, wie Plexiglas, unterhalb des jeweiligen Holzelementes (21 bis 26) angeordnet ist, welcher zusätzlich gewährleistet, dass eine gleichmässige Beleuchtung auf dem Holzelement erzeugt wird.

## Claims

1. A vehicle interior with an illumination device and with areas, such as centre consol (20), dashboard (12) and/or side doors (16, 17), which are at least partially covered by real wood elements (21 to 26), whereby illumination means (31', 35', 35") of the illumination device being arranged on the underside of the wood elements (21 to 26), said illumination means being able to be used to produce visible illumination in the vehicle interior, whereby by these plurality of differently shaped producible illuminations (30 to 35) are formed with a defined orientation, **characterised in that**
each of the illumination means (31', 35', 35") are respectively contained comprising a number of LED lights arranged one behind the other in an elongate housing (39) in order to form a linearly formed illumination, and above this housing (39) the wood element (21 to 26) in the form of a veneer is provided with a correspondingly translucent thickness, such that these illumination means (31', 35', 35") are not visible to an occupant in the switched off condition, and the LED lights are spaced apart from one another here such that these illuminations, which can be produced in a line, appear without interruption on the upper side of the wood elements (21 to 26).

2. The vehicle interior according to claim 1, **characterised in that** the vehicle interior is provided with a driver and a passenger seat and a centre console (20), a dashboard (12) and side doors (16, 17), and that an almost continuous linearly formed illumination (30, 31), that extends along the centre console (20), in an outward curve at the front on the dashboard (12) and along the respective side doors (16, 17), can respectively be produced at the driver and at the passenger seat.

3. The vehicle interior according to any of the preceding claims, **characterised in that**
the vehicle interior is provided with a driver and a passenger seat and a centre console (20), and that additional, linearly formed illuminations (34, 35) are respectively provided on the centre console (20) on the driver and the passenger seat.

4. The vehicle interior according to any of the preceding claims, **characterised in that**
the wood elements (21 to 26) are made with a thickness of approximately a few tenths of a millimetre to a few millimetres, whereby this thickness being chosen such that on the one hand the strength of the wood elements is sufficient and on the other hand this translucency is achieved optimally.

5. The vehicle interior according to claim 1, **characterised in that** in the illumination means (31', 35', 35") at least one strip (41) made of a light diffusing material, such as Plexiglas, is respectively disposed beneath the respective wood element (21 to 26), which additionally guarantees that even illumination is produced over the wood element.

## Revendications

1. Intérieur de véhicule ayant un dispositif d'éclairage et des parties de surface, comme une console (20) centrale, un tableau de bord (12) et/ou des portes (16, 17) latérales, qui sont recouvertes au moins en partie d'éléments (21 à 26) en bois véritable, des moyens (31', 35', 35") d'éclairage du dispositif d'éclairage étant disposés du côté inférieur des éléments (21 à 26) en bois, par lesquels un éclairage visible peut être produit à l'intérieur du véhicule, dans lequel il est formé par ceux-ci plusieurs éclairages (30 à 35) pouvant être produits en diverses formes et ayant une direction déterminée, **caractérisé en ce que** les moyens (31', 35', 35") d'éclairage, composés chacun d'un certain nombre d'éclairages par diode électroluminescente montés les uns derrière les autres, sont contenus dans un boîtier (39) oblong pour former un éclairage linéaire et, au-dessus de ce boîtier (39), l'élément (21 à 26) en bois constitué en plaquage est pourvu d'une épaisseur translucide telle que ces moyens (31', 35', 35") d'éclairage, à l'état débranché, ne sont pas visibles par des occupants et les éclairages par diode électroluminescente sont disposés à une distance telle les uns des autres que ces éclairages pouvant être produits linéairement apparaissent sans interruption du côté supérieur des éléments (21 à 26) en bois.

2. Intérieur de véhicule suivant la revendication 1, **caractérisé en ce que** l'intérieur du véhicule a un siège de conducteur et de passager ainsi qu'une console (20) centrale, un tableau de bord (12) et des portes (16, 17) latérales et **caractérisé en ce qu'**il peut être produit au siège du conducteur et au siège du passager, respectivement, un éclairage (30, 31) linéaire à peu près continu, qui s'étend le long de la console (20) centrale vers l'avant au tableau de bord (12), en forme d'arc vers l'extérieur et le long des portes (16, 17) latérales respectives.

3. Intérieur de véhicule suivant l'une des revendications précédentes, **caractérisé en ce que** l'intérieur du véhicule a un siège de conducteur et un siège de passager et une console (20) centrale et **caractérisé en ce qu'**il est prévu des éclairages (34, 35) linéaires supplémentaires pour la console (20) centrale respectivement au siège du conducteur et au siège du passager.

4. Intérieur de véhicule suivant l'une des revendications précédentes, **caractérisé en ce que** les éléments internes (21 à 26) en bois ont une épaisseur d'environ quelques dixièmes de millimètres à quelques millimètres, cette épaisseur étant choisie de manière à être suffisante d'une part pour la solidité des éléments en bois, et d'autre part pour que la transparence à la lumière soit satisfaite au mieux.

5. Intérieur de véhicule suivant la revendication 1, **caractérisé en ce que** dans les moyens (31', 35', 35") d'éclairage est disposée respectivement au moins une bande (41) en un matériau dispersant la lumière, comme le plexiglas, en-dessous de l'élément (21 à 26) en bois respectif, qui assure en outre qu'un éclairage uniforme est produit sur l'élément en bois.
